Europäisches Patentamt

European Patent Office

Office européen des brevets

(11) Veröffentlichungsnummer : **0 373 146 B1**

(19)

(12) **EUROPÄISCHE PATENTSCHRIFT**

(45) Veröffentlichungstag der Patentschrift :
**04.03.92 Patentblatt 92/10**

(51) Int. Cl.⁵ : **F02D 41/10, B60K 28/16, F02D 11/10, F02D 43/00**

(21) Anmeldenummer : **89890308.3**

(22) Anmeldetag : **04.12.89**

(54) **Verfahren und Vorrichtung zur Messung der Drehzahl einer elektronisch geregelten Brennkraftmaschine.**

(30) Priorität : **06.12.88 DE 3841059**

(43) Veröffentlichungstag der Anmeldung :
**13.06.90 Patentblatt 90/24**

(45) Bekanntmachung des Hinweises auf die
Patenterteilung :
**04.03.92 Patentblatt 92/10**

(84) Benannte Vertragsstaaten :
**AT BE CH DE ES FR GB IT LI NL SE**

(56) Entgegenhaltungen :
**WO-A-87/04758**
**WO-A-87/05967**
**US-A- 4 740 915**

(73) Patentinhaber : **Automotive Diesel
Gesellschaft m.b.H.
Derfflingerstrasse 15
A-4020 Linz (AT)**

(72) Erfinder : **Augesky, Christian, Dipl.-Ing.
Schrankenberggasse 18-20/2/22
A-1100 Wien (AT)**

(74) Vertreter : **Matschnig, Franz, Dipl.-Ing.
Siebensterngasse 54
A-1070 Wien (AT)**

EP 0 373 146 B1

**Beschreibung**

Die Erfindung bezieht sich auf ein Verfahren und auf eine Vorrichtung nach dem Oberbegriff der Patentansprüche 1 bzw.3.

Bei elektronisch geregelten Brennkraftmaschinen, insbesondere bei Dieselmotoren, ist die Motordrehzahl eine wesentliche bzw. die wesentlichste Ausgangsgröße für die Regelung. Man mißt daher die Drehzahl, indem meist am Schwungrad des Motors angebrachte Stifte, Marken oder Zähne mittels eines Sensors, z. B. eines induktiven Gebers, abgetastet werden. Die Frequenz des erhaltenen Ausgangssignals ist der Drehzahl proportional. Bei geringen Anforderungen können die Impulse des Ausgangssignals über einen bestimmten Zeitraum gezählt werden, üblicherweise wird jedoch eine Zeitmessung zwischen Impulsen des Sensorausgangssignals vorgenommen, wobei die Drehzahl den ermittelten Zeiten verkehrt proportional ist.

Eine bekannte Vorrichtung der gegenständlichen Art, die auch die Erfassung kürzerer Drehzahlschwankungen ermöglichen soll, ist aus der DE-A1-2902815 bekannt geworden. Hier werden Drehzahlimpulse von dem Zahnkranz der Schwungscheibe abgeleitet und durch Zeitmessung wird die Frequenz bestimmt.

Um eine optimale Regelung der Brennkraftmaschine zu erreichen, soll nicht nur die Einspritzmenge geregelt werden, sondern auch der Einspritzzeitpunkt verstellt werden. Überdies wird immer häufiger eine Einzelzylinderregelung angestrebt, bei welcher die Kraftstoffzumessung für jeden Zylinder individuell erfolgt. Auf diese Weise kann die auf Grund von Fertigungstoleranzen und Abnützungserscheinungen unterschiedliche Leistungsabgabe der einzelnen Zylinder ausgeglichen werden. Als Ausgangsgröße für eine Einzelzylinderregelung werden hiebei die periodischen Drehzahlschwankungen heangezogen, die einen Rückschluß auf zu große oder zu geringe Leistungsabgabe einzelner Zylinder ermöglichen. In diesem Fall ist die Kenntnis der durchschnittlichen Motordrehzahl alleine zu wenig, vielmehr muß für jeden Zylinder die zylinderspezifische Drehzahl gemessen werden. Einrichtungen zur Einzelzylinderregelung eines Dieselmotors im Leerlauf sind in den DE-A1-3 609 245 und 3 644 639 beschrieben, wobei als Bezugswert für die Drehzahlabweichung immer die Drehzahl des vorhergehenden Zylinders herangezogen wird. Da Instabilitäten der Einzelzylinderregelung sehr leicht auftreten können, wird diese Regelung oberhalb der Leerlaufdrehzahl oder bei Änderungen der Fahrpedalstellung etc. sofort abgeschaltet und die Regelung erfolgt dann in herkömmlicher Weise.

Bisher bekannte Lösungen zur Bestimmung der zylinderspezifischen Drehzahl sehen vor, daß am Schwungrad gleichverteilte Stifte angeordnet sind, deren Anzahl der Zylinderanzahl entspricht, und die durch einen Sensor abgetastet werden. Die Position der Stifte ist hiebei dem mechanischen oberen Totpunkt, im folgenden OT, eindeutig zugeordnet, z. B. bei Sechszylindermotoren 40° vor und 20° nach OT. Mittels eines Nadelhubsignales kann auch jeder Zylinder eindeutig identifiziert werden. Die Signale des Stiftsensors werden sowohl zur Drehzahlmessung als auch zur Bestimmung des Einspritzzeitpunktes herangezogen.

Ein weiteres Problem tritt auf, falls die bereits erwähnte Spritzverstellung, d.h. der relative Zeitpunkt der Einspritzung in die einzelnen Zylinder, geregelt werden soll. Hiebei kann die Einspritzung in einem Intervall von 15 bis 20° um den OT erfolgen, z. B. 10 bis 15° vor dem OT und 5° nach dem OT. Dieser Bereich erfordert jedoch bei den bekannten Lösungen, daß der Winkelabstand aufeinanderfolgender Stifte größer ist, als der Einspritzverstellbereich, da andernfalls eine eindeutige Zuordnung nicht mehr möglich ist, d.h. ein kleinerer Winkelabstand der Stifte als etwa 25° ist nicht möglich, wodurch auch eine Auflösungsgrenze gesetzt ist.

Um die Auflösung zu erhöhen, bietet sich die Verwendung z. B. der Zähne des Anlasserzahnkranzes für die Bereitstellung der Drehzahlimpulse an, wie dies aus der bereits erwähnten DE-A1-29 02 815 bekannt ist. Für ein in der Praxis anzutreffendes Schwungrad mit beispielsweise 120 Zähnen ergibt sich eine Winkelauflösung von 360°:120 = 3°. Bei der bekannten Lösung ist die Messung zylinderspezifischer Drehzahlen jedoch nicht möglich, da keine Zuordnung der Drehzahlsignale zu den einzelnen Zylindern gegeben ist.

Ziel der Erfindung ist eine Drehzahlmessung, die eine Regelung der Spritzverstellung, sowohl bei Regelung aller Zylinder über ein gemeinsames Stellglied, meist die Regelstange der Einspritzpumpe, als auch bei Einzelzylinderregelung mit Ansteuerung einzelner Einspritzdüsen, die dann als Pumpedüsen ausgeführt sein können, ermöglicht.

Dieses Ziel läßt sich mit einem Verfahren nach dem Kennzeichen des Anspruches 1 bzw. einer Vorrichtung nach dem Kennzeichen des Ansprüches 3 erreichen.

Ein wesentliches Merkmal der Erfindung ist somit darin zu sehen, daß das Drehzahlmeßintervall nicht absolut fest mit der Kurbelwellendrehung gekoppelt ist, sondern so verschoben werden kann, daß eine automatische Synchronisierung erfolgt und mehr Zeit für die Ausgabe der Regeldaten gewonnen wird, was weiter unten näher erläutert wird. Die Verwendung des bereits vorhandenen Zahnkranzes erfordert keine kostspieligen Veränderungen an dem Motor.

Weitere wesentliche Merkmale sind in den Unteransprüchen 2, 4 und 5 gekennzeichnet.

Die Erfindung samt ihren weiteren Vorteilen ist im folgenden an Hand eines Ausführungsbeispiels näher erläutert, das in der Zeichnung veranschaulicht ist. In dieser zeigen Fig. 1 ein Blockschaltbild des Ausführungsbeispiels, Fig. 2 in einem Diagramm den zeitlichen Verlauf der Drehzahl im Zusammenhang mit dem verwendeten Meßintervall und dem Auftreten eines Nadelhubsignales Rücksetzsignale für den Drehzahlzähler, Fig. 3 ein mögliches Ablaufdiagramm zur Berechnung der Drehzahl und Fig. 4 ein Ablaufdiagramm eines Kalibriervorganges.

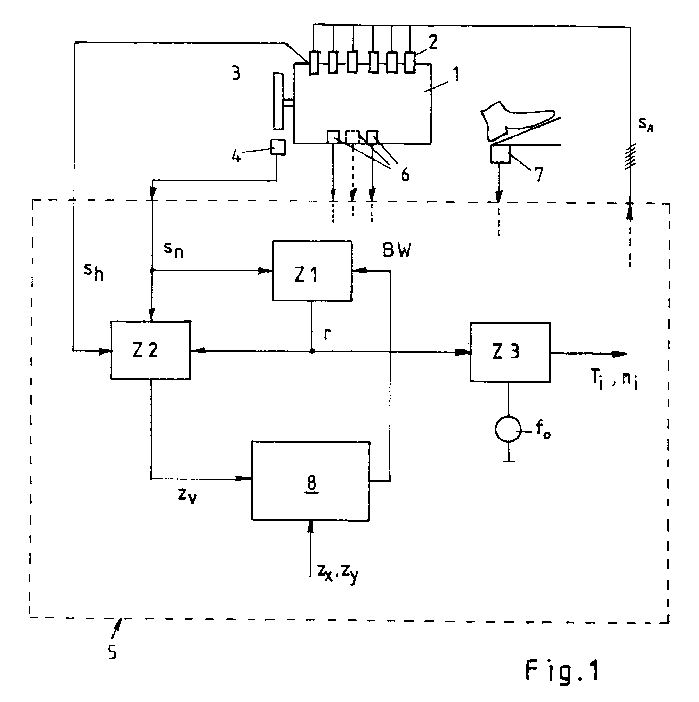

Aus Fig. 1 geht ein Sechszylinder-Dieselmotor 1 hervor, der mit Pumpedüsen 2 zur Kraftstoffeinspritzung versehen ist. Die Pumpedüsen 2 besitzen nicht gezeigte Nadelhubsensoren, die bei der Öffnungsbewegung der Ventilnadel ein Nadelhubsignal $s_h$ abgeben. Eine solche Pumpedüse mit Nadelhubsensor ist Gegenstand der nicht vorveröffentlichten Patentanmeldung DE-37 26 712 der Anmelderin.

Dem mit Zähnen versehenen Schwungrad 3 des Motors 1 ist ein Drehzahlsensor 4 zugeordnet, der beim Vorüberlaufen eines Zahnes jedesmal einen Zahnimpuls $s_n$ abgibt. Eine dem Fachmann geläufige Impulsformung kann erforderlichenfalls vorgesehen sein.

Für die Regelung des Motors 1 ist ein elektronischer Regler 5 vorgesehen, dem außer den Nadelhubsignalen $s_h$ und den Zahnimpulsen $s_n$ noch weitere Betriebsgrößensignale von Gebern 6, z.B. Gebern für die Motortemperatur, den Ladedruck etc. sowie ein Signal eines Gaspedalstellungssensors 7 zugeführt sind. In Abhängigkeit von den zugeführten Signalen errechnet der Regler 5 ein Ausgangssignal $s_A$, bzw. Ausgangssignale, zur Ansteuerung der Mengenverstellung der Pumpedüsen 2 oder auch weiters zur Verstellung des Einspritzzeitpunktes. Elektronische Regler dieser Art gehören dem Stand der Technik an und müssen daher hier nicht im Detail beschrieben werden. Im hier gezeigten Beispiel werden die Pumpedüsen 2 einzeln angesteuert, doch kann statt der Pumpedüsen auch eine übliche Einspritzpumpe Verwendung finden, wobei dann die Lage der Regelstange von dem Regler 5 gesteuert bzw. geregelt wird. Allerdings muß zumindest eine der Einspritzdüsen einen Nadelhubsensor aufweisen.

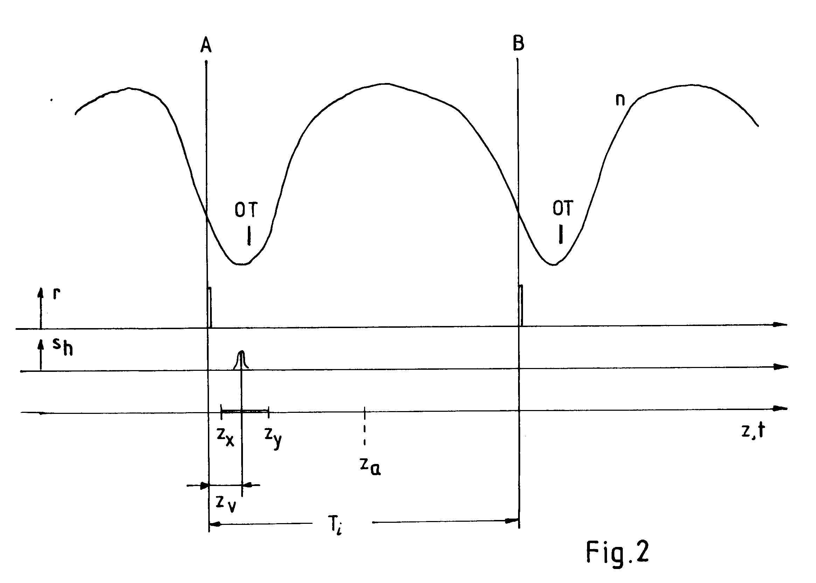

Vor einer weiteren Erläuterung des Blockschaltbildes erscheint es nun angebracht, einen Blick auf Fig. 2 zu werfen. Hier ist der Verlauf der Drehzahl n, genauer gesagt vor allem ihrer zeitlichen Änderung, über den einzelnen Arbeitstakten der Zylinder aufgetragen, wobei ein von A bis B reichendes Drehzahlmeßintervall eines der Zylinder besonders herausgegriffen ist. Mit OT ist der jeweilige mechanische obere Totpunkt bezeichnet. Der Drehzahlverlauf ist über der Zeit t bzw. über der Zähnezahl z des Schwungrades aufgetragen. Für das vorliegende Beispiel wird eine Gesamtzähnezahl von 120 angenommen, sodaß sich bei einem 6-Zylindermotor ein Arbeitstakt bzw. ein Meßintervall über 40 Zähne erstreckt (120° Kurbelwellenwinkel).

Der tatsächliche Einspritzzeitpunkt ist durch das Auftreten eines Nadelhubimpulses $s_h$ gekennzeichnet, das von Beginn A des Meßintervalles nach $z_v$ Zähnen erfolgt. Da eine Verstellung des Einspritzzeitpunktes erfolgt, tritt das Nadelhubsignal nicht immer an derselben Stelle $z_v$ auf, vielmehr kann die Einspritzung je nach Betriebsbedingungen früher oder später erfolgen, beispielsweise 10 bis 15° vor OT bis 5° nach OT. Ein entsprechend angenommenes Einspritzintervall erstreckt sich demgemäß von einer unteren Grenze $z_x$ bis zu einer oberen Grenze $z_y$.

Das Meßintervall AB für die jeweilige Drehzahlmessung soll nun so gelegt werden, daß es das ganze Spritzverstellintervall $z_x$ $z_y$ mit Sicherheit enthält. Die naheliegendste Lösung, den Beginn des Meßintervalls durch das Nadelhubsignal festzulegen, hätte nämlich den Nachteil, daß das Meßintervall, dem variablen Spritzbeginn entsprechend, ständig um bis zu 20° verschoben würde. Dazu kommt, daß in diesem Fall der Beginn des Meßintervalles innerhalb eines Gebietes der stärksten Drehzahländerung (siehe Fig. 2) verschoben würde, was eine weitere Meßungenauigkeit mit sich brächte. Überdies ist bei einer Einzelzylinderregelung mit gemeinsamer Einspritzpumpe zu beachten, daß vor allem wegen der Masseträgheit ihres Mengenstellgliedes eine gewisse Minimalzeit benötigt wird, bis die dem jeweils nächsten Zylinder entsprechende Postion eingenommen ist. Daher muß der Regler die Ansteuerdaten für die Regelstangenposition des nächsten Zylinders möglichst früh ausgeben z.B. in der Mitte des Meßintervalls, in Fig. 2 mit $z_a$ bezeichnet. Natürlich muß dieser Ausgabezeitpunkt $z_a$ nach der Einspritzung des vorangehenden Zylinders liegen. Auch dies ist ein Grund für die angestrebte Lage des Meßintervalls.

In Zusammenhang mit Fig. 1 wird nun die Realisierung der Meßintervallverschiebung nach der Erfindung erläutert. Die Zahnimpulse $s_n$ werden einem ersten Zähler Z1 zugeführt, dem außerdem ein Bezugswert BW vorgegeben ist. Zunächst sei dieser Bezugswert als Konstante angenommen, beispielsweise mit $BW_o = 40$. Dies bedeutet, daß Zähler Z1 immer bis 40 Zähne zählt, sodann ein Rücksetzsignal r abgibt und erneut bis 40 zählt. Dadurch werden innerhalb von zwei Umdrehungen des im Beispiel mit 120 Zähnen versehenen Schwungrades insgesamt sechs Rücksetzimpulse, entsprechend den sechs Zylindern, abgegeben und einem Zähler Z3 zugeführt, der die Zeit $T_i$ zwischen den Rücksetzimpulsen mißt und wodurch die Drehzahl $n_i$ über die einzelnen Meßintervalle bestimmt werden kann. Die Zeitmessung erfolgt in bekannter Weise durch Zählen einer konstanten Frequenz $f_o$ zwischen den einzelnen Rücksetzimpulsen.

Der Regler 5 enthält weiters eine Rechenschaltung 8, die den Bezugswert BW für den Zähler Z1 vorgibt, und zwar in Abhängigkeit davon, ob das Nadelhubsignal $s_h$ innerhalb eines gewissen Intervalls $z_x$, $z_y$ auftritt bzw. davor oder danach. Einem Zähler Z2 sind als Zählimpulse die Zahnimpulse $s_n$ zugeführt, als Startimpulse

die von dem Zähler Z1 stammenden Rücksetzimpulse r und als Stopimpulse das Nadelhubsignal $s_h$ eines Nadelhubsensors 2. Im Zähler Z2 wird somit die Zähneanzahl $Z_v$ zwischen einem Rücksetzimpuls r und dem Nadelhubsignal $s_h$ ermittelt und der Rechenschaltung 8 zugeführt. Dieser Rechenschaltung werden außerdem Intervallgrenzen $z_x$ bzw. $z_y$ eingegeben, die im allgemeinen die untere bzw. obere Grenze des möglichen Einspritzintervalls darstellen, das beispielsweise 20°, in Zähne umgerechnet beispielsweise etwa 7 Zähne, betragen kann.

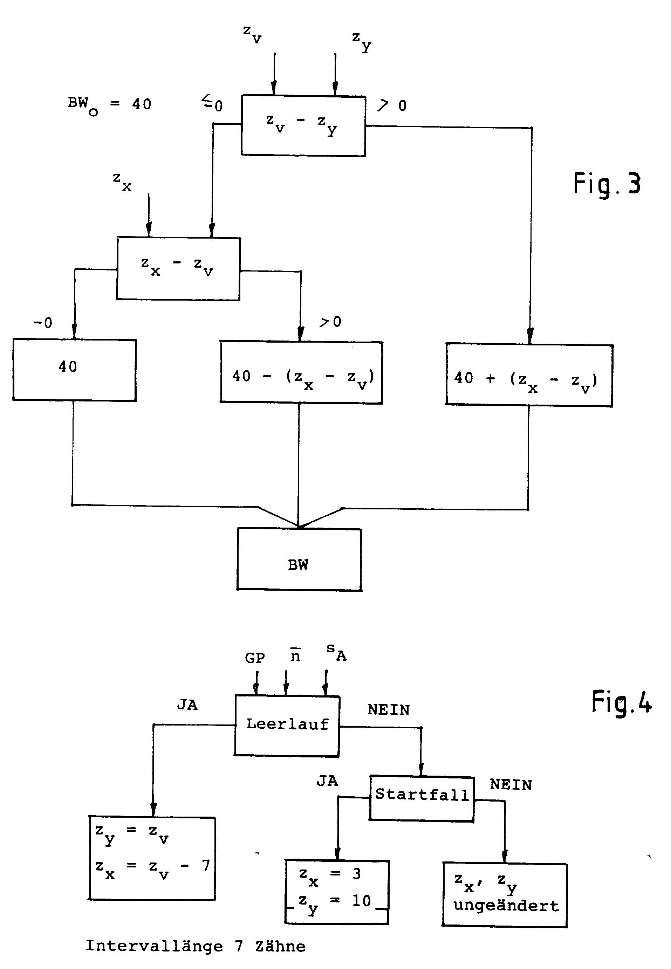

In der Rechenschaltung 8 wird nun überprüft, ob die im Zähler Z2 bestimmte Zähnezahl $Z_v$ unter der unteren Grenze $z_x$, über der oberen Grenze $z_y$ oder innerhalb des Intervalls $z_x$, $z_y$ liegt. In diesem Zusammenhang wird auf das Ablaufdiagramm nach Fig. 3 verwiesen. Liegt $Z_v$ innerhalb des Intervalls $z_x$, $z_y$, so wird der konstante Bezugswert $BW_o$, hier $BW_o = 40$, für den Zähler Z1 beibehalten, das Meßintervall A, B wird daher nicht verschoben. Tritt hingegen das Nadelhubsignal $s_h$ vor der unteren Grenze $z_x$ auf, ist somit $z_v < z_x$, so wird der Bezugswert um den Betrag $z_x$-$z_v$ für eine Meßperiode verringert, wodurch das Meßintervall so verschoben wird, daß das Nadelhubsignal $s_h$ wieder in das Intervall $z_x$, $z_y$ fällt. Natürlich kann auch eine etwas größere Verringerung um einige Zähne zusätzlich vorgenommen werden, damit man nicht wieder genau an der Intervallgrenze liegt.

Sinngemäß erfolgt eine vorübergehende Erhöhung des Bezugswertes mindestens um den Betrag von $z_v$ - $z_y$, falls das Nadelhubsignal nach der oberen Intervallgrenze $z_y$ auftritt, falls also $z_v > z_y$ ist.

Das Verschieben des Meßintervalls A, B kann gegebenenfalls auch schrittweise während mehrerer Arbeitstakte erfolgen, indem der Bezugswert beispielsweise nur je um einen Zahn, d.h. um um die Zahl 1 erhöht oder erniedrigt wird, bis die gewünschte Lage des Meßintervalls erreicht wird. Da die Rechenschaltung 8 meist in einem Mikrocomputer des Reglers softwaremäßig realisiert ist, läßt hier der Einsatz geeigneter, im Wissen des Fachmannes gelegener Software, weiteren Spielraum.

Zusätzlich kann eine genaue Kalibrierung, vorzugsweise im Leerlauf des Motors, vorgenommen werden. Zu diesem Zweck kann man im Leerlauf bei Verstellung auf den spätestmöglichen Einspritzzeitpunkt die Grenze $z_y$ mit dem Einspritzpunkt $z_v$ zusammenfallen lassen oder zumindest näher an den Einspritzpunkt legen. Der Regler 1 stellt hiebei an Hand der Gaspedalstellung GP, der Ausgabemenge (Ausgangssignal $s_A$ des Reglers 1) und der mittleren Drehzahl $\bar{n}$ fest, ob Leerlauf vorliegt und gibt sodann der Rechenschaltung 8 geänderte Intervallgrenzen, z.B. $z_y = z_v$ und $z_x = z_v$-Intervall vor. Hiezu wird auf das beispielsweise Ablaufdiagramm nach Fig. 4 verwiesen. Die Kalibrierung ist hier auf den Leerlaufbetrieb nach dem Starten des Motors eingeschränkt.

## Patentansprüche

1. Verfahren zur Messung der Drehzahl einer elektronisch geregelten Brennkraftmaschine, bei welchem Zähnen, Marken od.dgl. am Umfang eines rotierenden Teiles der Maschine, z.B. ihres Schwungrades, entsprechende Zahnimpulse ($s_n$) sowie einer gewissen Anzahl von Zähnen entsprechende Rücksetzimpulse (r) erzeugt werden und zur Drehzahlbestimmung die Zeit ($T_l$) zwischen den Rücksetzimpulsen gemessen wird, dadurch gekennzeichnet, daß der Abstand der Rücksetzimpulse der Länge eines Arbeitshubes eines Zylinders entsprechend gewählt wird, solange ein von einem Nadelhubsensor einer Einspritzdüse stammendes Nadelhubsignal ($s_h$) innerhalb eines vorgegebenen Einspritzintervalles ($z_x$, $z_y$) jedes Arbeitshubes liegt, dieser Abstand jedoch vorübergehend verkleinert oder vergrößert wird, falls das Nadelhubsignal ($s_h$) außerhalb dieses Intervalles ($z_x$, $z_y$), nämlich unterhalb oder oberhalb der Intervallgrenzen ($z_x$ bzw. $z_y$) liegt.

2. Verfahren nach Anspruch 1, dadurch gekennzeichnet, daß z. B. im Leerlauf der Maschine eine Kalibrierungsmessung vorgenommen wird, bei welcher die untere und obere Intervallgrenze ($z_x$, $z_y$) näher an den Einspritzpunkt ($z_v$) gerückt werden, als im normalen Betrieb, bzw. mit dem Einspritzpunkt ($z_v$) zusammenfallen.

3. Vorrichtung zur Messung der Drehzahl einer mittels eines elektronischen Reglers geregelten Einspritzbrennkraftmaschine nach Anspruch 1 oder 2, mit gleichmäßig am Umfang eines rotierenden Teiles der Maschine, insbesondere am Schwungrad, verteilten Zähnen, Marken od.dgl. und einem diesen Zähnen zugeordneter Sensor (4), der zur Abgabe von Zahnimpulsen ($s_n$) eingerichtet ist, und mit einem Zähler (Z3), dem einerseits eine frequenzkonstante Meßimpulsfolge ($f_o$) und andererseits einer gewissen Anzahl von Zähnen entsprechende Rücksetzimpulse zugeführt werden, zur Zählung der Zeit ($T_l$) zwischen den Rücksetzimpulsen und zur Abgabe eines entsprechenden Drehzahlsignales, dadurch gekennzeichnet, daß zur Messung der zylinderspezifischen Drehzahlen ($n_l$) ein erster Zähler (Z1) vorgesehen ist, dem die Zahnimpulse ($s_n$) des Sensors (4) und ein Bezugswert (BW) zugeführt sind, wobei der erste Zähler (Z1) zur Abgabe eines Rücksetzimpulses (r) an den (dritten) Zähler (Z3) eingerichtet ist, sobald die gezählten Zahnimpulse ($s_n$) den vorgegebenen Bezugswert (BW) erreichen, daß ein zweiter Zähler (Z2) vorgesehen ist, dem als Zählimpulse die Zahnimpulse ($s_n$), das Nadelhubsignal ($s_h$) des Nadelhubsensors einer Einspritzdüse (Z) und die im erten Zähler (Z1) erzeugten Rücksetzimpulse (r) zugeführt sind, und dieser zweite Zähler (Z2) zur Ermittlung der Zähnezahl ($z_v$) zwi-

EP 0 373 146 B1

schen dem Auftreten des Nadelhubsignals ($s_h$) und einem Rücksetzimpuls (r) eingerichtet ist und daß dem zweiten Zähler (Z2) eine Rechenschaltung (8) nachgeordnet ist, die einen konstanten Bezugswert ($BW_o$) an den ersten Zähler (Z1) abgibt, soferne die im zweiten Zähler (Z2) ermittelte Zähnezahl ($z_w$) innerhalb eines vorgegebenen Einspritzintervalles ($z_x$, $z_y$) liegt, die den Bezugswert (BW) jedoch vorübergehend zumindest um die Differenz ($z_x$-$z_v$) zwischen der unteren Intervallgrenze ($z_x$) und der im zweiten Zähler (Z2) gemessenen Zähnezahl ($z_v$) herabsetzt, falls die Zähnezahl ($z_v$) unter der unteren Intervallgrenze ($z_x$) liegt und die den Bezugswert (BW) vorübergehend zumindest um den Absolutwerkt der Differenz ($z_v$-$z_y$) zwischen der gemessenen Zähnezahl ($z_v$) und der oberen Intervallgrenze ($z_y$) hinaufsetzt, falls die gemessehe Zähnezahl ($z_v$) über der oberen Intervallgrenze ($z_y$) liegt.

4. Vorrichtung nach Anspruch 3, dadurch gekennzeichnet, daß die Rechenschaltung (8) den Bezugswert (BW) während des auf den jeweiligen Meßarbeitstakt folgenden Arbeitstaktes erhöht bzw. erniedrigt.

5. Vorrichtung nach Anspruch 3 oder 4, dadurch gekennzeichnet, daß der Regler zur Durchführung einer Kalibrierungsmessung, z.B. im Leerlaufbetrieb, eingerichtet ist, wobei der Rechenschaltung (8) eine obere Intervallgrenze ($z_y$) vorgegeben wird, die bei Einstellung auf spätest möglichen Einspritzzeitpunkt ($z_v$) in dessen Nähe liegt bzw. mit diesem zusammenfällt.


## Claims

1. A method of measuring the rotational speed of an electronically controlled internal combustion engine, in which tooth pulses ($s_n$) are produced corresponding to teeth, marks or similar at the periphery of a rotating part of the engine, e.g. its flywheel, and reset pulses (r) are produced corresponding to a certain number of teeth, and the time ($T_l$) between the reset pulses is measured to determine the rotational speed, characterised in that the spacing of the reset pulses is selected to correspond to the length of a combustion stroke of a cylinder as long as a needle stroke signal ($s_h$) derived from a needle stroke sensor of a fuel injector falls within a predetermined injection time interval ($z_x$, $z_y$) for each combustion stroke, but that this spacing is temporarily reduced or increased if the needle stroke signal ($s_h$) lies outside this time interval ($z_x$, $z_y$), namely above or below the limits of the time interval ($z_x$ or $z_y$).

2. A method according to Claim 1, characterised in that a calibration measurement is made, e.g. when the engine is idling, in which the upper and lower limits of the time interval ($z_x$, $z_y$) are moved closer to the time of injection ($z_y$) than in normal operation, or coincide with the time of injection ($z_y$).

3. A device for measuring the rotational speed of a fuel-injected internal combustion engine controlled by an electronic controller according to Claims 1 or 2, with teeth, marks or similar uniformly distributed at the periphery of a rotating part of the engine, especially the flywheel, and a sensor (4) associated with these teeth which is set to the output of tooth pulses ($s_n$), and with a counter (Z3) which is fed on the one hand with a series of measurement pulses at constant frequency, and on the other hand with reset pulses corresponding to a certain numer of teeth, for measuring the time ($T_l$) between the reset pulses and for emitting a corresponding rotational speed signal, characterised in that a first counter (Z1) is provided for measuring the rotational speeds ($n_l$) specific to each cylinder, to which the tooth pulses ($s_n$) from the sensor (4) and a reference value (BW) are fed, wherein the first counter (Z1) is set to emit a reset pulse (r) to the (third) counter (Z3) as soon as the number of tooth pulses ($s_n$) counted reaches the predetermined reference value (BW), that a second counter (Z2) is provided, to which the tooth pulses ($s_n$), the needle stroke signal ($s_h$) from the needle stroke sensor of a fuel injector (Z), and the reset pulses (r) produced in the first counter (Z1) are fed as counting pulses, that this second counter (Z2) is set to determine the number of teeth ($z_v$) between the occurrence of the needle stroke signal ($s_h$) and a reset pulse (r), and that a computational circuit (8) is disposed downstream of the second counter (Z2), which circuit provides a constant reference value ($BW_0$) to the first counter (Z1), as long as the number of teeth ($z_w$) determined by the second counter (Z2) falls within a predetermined injection time interval ($z_x$, $z_y$), which circuit however temporarily reduces the reference value by at least the difference ($z_x$ - $z_y$) between the lower limit of the time interval ($z_x$) and the number of teeth ($z_v$) measured by the second counter (Z2) if the number of teeth ($z_v$) is below the lower limit ($z_x$) of the time interval, and which circuit temporarily increases the reference value (BW) by at least the difference ($z_v$ - $z_y$) between the measured number of teeth ($z_v$) and the upper limit ($z_y$) of the time interval if the measured number of teeth ($z_v$) is above the upper limit ($z_y$) of the time interval.

4. A device according to Claim 3, characterised in that the computational circuit (8) increases or reduces the reference value (BW) during the operating cycle following each measured operating cycle.

5. A device according to Claims 3 or 4, characterised in that the controller is set for making a calibration measurement, e.g. on idling, wherein an upper limit ($z_y$) of the time interval is fed to the computational circuit (8), and that for adjustment to the latest possible time of injection ($z_v$) this upper limit is in the region of the latter or coincides with it.

5

## Revendications

1. Procédé pour mesurer la vitesse de rotation d'un moteur à combustion interne à régulation électronique, selon lequel des impulsions de dents ($s_n$), qui correspondent à des dents, des marques ou analogues situées sur le pourtour d'un élément tournant du moteur, par exemple son volant, ainsi que des impulsions de remise à zéro (r), qui correspondent à un certain nombre de dents, sont produites et l'intervalle de temps ($T_i$) entre les impulsions de remise à zéro est mesuré pour la détermination de la vitesse de rotation, caractérisé en ce que la distance entre les impulsions de remise à zéro est choisie de manière à correspondre à la durée d'une course de travail d'un cylindre tant qu'un signal ($s_h$) de course d'aiguille, qui est délivré par un capteur de la course de l'aiguille d'un injecteur, se situe à l'intérieur d'un intervalle prédéterminé d'injection ($z_x$, $z_y$) de chaque course de travail, mais que cette distance est réduite ou accrue de façon transitoire dans le cas où le signal ($s_h$) de course de l'aiguille est situé en dehors de cet intervalle ($z_x$, $z_y$), c'est-à-dire au-dessous ou au-dessus des limites ($z_x$ ou $z_y$) de cet intervalle.

2. Procédé selon la revendication 1, caractérisé en ce que lors de la marche du moteur au ralenti, on exécute une mesure de calibrage lors de laquelle les limites inférieure et supérieure ($z_x$, $z_y$) de l'intervalle sont amenées dans une position plus proche du point d'injection ($z_v$) que pendant le fonctionnement normal ou coïncident avec le point d'injection ($z_v$).

3. Dispositif pour mesurer la vitesse de rotation d'un moteur à combustion interne réglé au moyen d'un régulateur électronique selon la revendication 1 ou 2, comportant des dents, des marques ou analogues, réparties uniformément sur le pourtour d'un élément tournant du moteur, notamment le volant, et un capteur (4), qui est associé à ces dents et est agencé de manière à délivrer des impulsions de dents ($s_n$), et un compteur (Z3) auquel sont envoyés d'une part une suite d'impulsions de mesure ($f_o$) à fréquence constante et d'autre part un certain nombre d'impulsions de remise à zéro correspondant à des dents, pour le comptage de l'intervalle de temps ($T_i$) entre les impulsions de remise à zéro et la délivrance d'un signal correspondant à la vitesse de rotation, caractérisé en ce que pour la mesure des vitesses de rotation ($n_i$) spécifique aux cylindres, il est prévu un premier compteur (Z1), auquel sont envoyées les impulsions de dents ($s_n$) du capteur (4) et une valeur de référence (BW), le premier compteur (Z1) étant agencé de manière à délivrer une impulsion de remise à zéro (r) au (troisième) compteur (Z3) dès que les impulsions de dents ($s_n$) comptées atteignent la valeur de référence prédéterminée (BW), qu'il est prévu un second compteur (Z2) auquel sont envoyées, en tant qu'impulsions de comptage, les impulsions de dents ($s_n$), le signal ($s_h$) de course de l'aiguille, délivré par le capteur de la course de l'aiguille d'un injecteur (Z) et les impulsions de remise à zéro (r) produites dans le premier compteur (Z1), et que ce second compteur (Z2) est agencé de manière à déterminer le nombre de dents ($z_v$) entre l'apparition du signal ($s_h$) de course de l'aiguille et un signal de remise à zéro (r), et qu'en aval du second compteur (Z2) est branché un circuit de calcul (8), qui délivre une valeur de référence constante ($BW_o$) au premier compteur (Z1), dans la mesure où le nombre de dents ($z_w$) déterminé dans le second compteur (Z2) se situe à l'intérieur d'un intervalle prédéterminé d'injection ($z_x$, $z_y$), qui réduit cependant transitoirement la valeur de référence (BW) au moins de la différence ($z_x$-$z_v$) entre la limite inférieure ($z_x$) de l'intervalle et le nombre de dents ($z_v$) mesuré dans le second compteur (Z2), dans le cas où le nombre de dents ($z_v$) est inférieur à la limite inférieure ($z_x$) de l'intervalle, et qui augmente de façon transitoire la valeur de référence (BW), au moins de la valeur absolue de la différence ($z_v$-$z_y$) entre le nombre de dents mesuré ($z_v$), dans le cas où le nombre de dents mesuré ($z_v$) est supérieur à la limite supérieure ($z_y$) de l'intervalle.

4. Dispositif selon la revendication 3, caractérisé en ce que le circuit de calcul (B) accroît ou réduit la valeur de référence (BW) pendant l'impulsion de cadence de travail qui succède à l'impulsion respective de cadence de travail de mesure.

5. Dispositif selon la revendication 3 ou 4, caractérisé en ce que le régulateur est agencé de manière à exécuter une mesure de calibrage, par exemple dans le fonctionnement à vide, auquel cas pour le circuit de calcul (B) se trouve prédéterminée une limite supérieure ($z_y$) de l'intervalle, qui, lors du réglage sur l'instant d'injection ($z_v$) le plus tard possible, est située à proximité de cet instant ou coïncide avec ce dernier.

Fig.1

Fig.2

EP 0 373 146 B1

Fig. 3

Fig. 4

Intervallänge 7 Zähne